(19) Europäisches Patentamt
European Patent Office
Office européen des brevets

(11) **EP 1 365 132 B1**

(12) **FASCICULE DE BREVET EUROPEEN**

(45) Date de publication et mention
de la délivrance du brevet:
**21.02.2007 Bulletin 2007/08**

(51) Int Cl.:
***F02D 41/14*** *(2006.01)*     ***F02B 37/12*** *(2006.01)*
***F02D 23/02*** *(2006.01)*

(21) Numéro de dépôt: **03291238.8**

(22) Date de dépôt: **23.05.2003**

(54) **Dispositif de commande d'un moteur suralimenté comprenant l'utilisation d'un élément de logique floue**

Vorrichtung zur Steuerung einer aufgeladenen Brennkraftmaschine unter Verwendung von Fuzzy-Logik

Device for controlling a supercharged engine using fuzzy logic

(84) Etats contractants désignés:
**BE DE ES GB IT**

(30) Priorité: **24.05.2002 FR 0206353**

(43) Date de publication de la demande:
**26.11.2003 Bulletin 2003/48**

(73) Titulaire: **Renault s.a.s.**
**92100 Boulogne Billancourt (FR)**

(72) Inventeur: **Fontvieille, Laurent**
**91700 Sainte Geneviève Des Bois (FR)**

(56) Documents cités:
**WO-A-95/02121**     **DE-A- 4 204 047**
**FR-A- 2 738 287**

- **ISERMANN R ET AL: "MODELLGESTUETZTE REGLERENTWICKLUNG FUER EINEN ABGASTURBOLADER MIT VARIABLER TURBINENGEOMETRIE AN EINEM DI-DIESELMOTOR" MTZ MOTORTECHNISCHE ZEITSCHRIFT, FRANCKH'SCHE VERLAGSHANDLUNG,ABTEILUNG TECHNIK. STUTTGART, DE, vol. 61, no. 3, mars 2000 (2000-03), pages 184-193, XP000928799 ISSN: 0024-8525**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 365 132 B1

## Description

Le domaine technique de cette invention est l'automobile, et plus précisément la commande de moteurs suralimentés diesels ou bien à essence.

La commande du moteur est la technique de réglage des performances d'un moteur à combustion interne au moyen de l'ensemble de ses capteurs et actionneurs. L'ensemble des lois de contrôle-commande (stratégie logicielle) et des paramètres de caractérisation (calibration) du moteur sont contenus dans un calculateur appelé UCE ou unité de commande électronique. De plus, les moteurs suralimentés comprennent un turbocompresseur composé d'une turbine et d'un compresseur servant à augmenter la quantité d'air admise dans les cylindres. La turbine est placée à la sortie du collecteur d'échappement et entraînée par les gaz d'échappement. La puissance fournie par les gaz d'échappement à la turbine peut être réglée en installant une soupape de décharge ou des ailettes qui influent sur le débit de gaz traversant la turbine ou la section de passage offerte à ces gaz. Le compresseur est monté sur le même axe que la turbine. Il comprime l'air entrant dans le collecteur d'admission. Un échangeur de chaleur peut être placé entre le compresseur et le collecteur d'admission pour refroidir l'air à la sortie du compresseur. Un actionneur est utilisé pour piloter l'ouverture et la fermeture de la soupape ou des ailettes. Le signal de commande de l'actionneur est fourni par l'UCE et permet d'asservir la pression de suralimentation présente au collecteur d'admission. Une consigne de pression au collecteur est calculée par l'UCE. La pression réelle au collecteur est mesurée par un capteur de pression.

L'UCE recalcule sans cesse la consigne de pression de suralimentation, en fonction du régime du moteur et du débit du carburant par exemple (ou bien à partir d'une consigne du débit d'air et de richesse), et elle aide à régler sans cesse le turbocompresseur par l'intermédiaire de régulateurs pour faire coïncider la consigne de pression à la pression réelle régnant dans le collecteur d'admission.

Avec l'augmentation des performances des moteurs suralimentés, le niveau de pression de suralimentation augmente, aussi les turbocompresseurs sont de plus en plus sollicités. Il est donc important de piloter le plus finement possible les turbocompresseurs pour éviter la détérioration du turbocompresseur et pour améliorer la qualité de conduite du véhicule aux accélérations.

Le réglage du turbocompresseur est classiquement réalisé au moyen de signaux provenant de régulateurs PID (proportionnel, intégral, différentiel) d'après l'évolution de la différence entre la consigne de pression et la pression réelle mesurée. De plus, une cartographie de pré-positionnement est généralement ajoutée dans l'UCE pour donner une première valeur estimée de réglage du turbocompresseur en fonction du régime du moteur et du débit et faciliter ainsi le réglage.

On observe toutefois que l'asservissement de la pression de suralimentation est difficile avec les moyens d'asservissement connus jusqu'à présent. La consigne de pression de suralimentation se présente typiquement sous forme d'un échelon de pression qui apparaît quand l'accélérateur a été enfoncé, et la pression réelle n'atteint la hauteur de l'échelon qu'avec un retard. Dans certains systèmes, ce retard est important ; dans d'autres, il l'est beaucoup moins, mais un phénomène oscillatoire de la pression réelle au-dessus et au-dessous de la valeur de consigne apparaît ensuite (ce qu'on appelle des overshoots et undershoots), et cette instabilité de réglage nuit à la qualité de la conduite et peut entraîner des dommages. Le but de l'invention est de fournir une convergence à la fois plus rapide et stable de la pression de suralimentation vers sa valeur de consigne pendant un régime transitoire.

On verra qu'un moyen important est l'utilisation d'un régulateur à logique floue (ou lâche) dans l'UCE. On connaît certes des exemples de commande de moteurs suralimentés exploitant la logique floue. Le brevet français 2 738 287 comprend un tel élément, mais qui est plutôt appliqué à régler la différence de pression entre le collecteur d'admission et le collecteur d'échappement, ce qui impose d'y placer un autre capteur qui enchérit le système et implique une modification assez importante au mode d'asservissement du moteur. Ici, les deux variables exploitées par l'élément à logique floue sont la différence entre la consigne de pression et la pression réelle, c'est-à-dire la variable même qu'il faut réduire, et la dérivée d'après le temps de cette variable. On peut donc supposer que le résultat exigé ci-dessus sera mieux atteint.

DE - 42 04 047 - A et WO - 95/02121-A décrivent des asservissements utilisant l'erreur entre une valeur de consigne et une valeur réelle ainsi que la dérivée temporelle de cette valeur, mais dans des conditions où ils ne conviennent pas au domaine de l'invention.

Pour résumer, l'invention est relative sous forme la plus générale à un dispositif de commande d'un moteur suralimenté d'automobile, selon la revendication 1.

On passe maintenant aux commentaires des figures suivantes :

- la figure 1 illustre un système à moteur suralimenté et UCE ;
- la figure 2 représente une UCE conforme à l'invention ;
- la figure 3 représente complètement un module de calcul d'une consigne de débit de carburant ;
- la figure 4 illustre une variante d'UCE ;

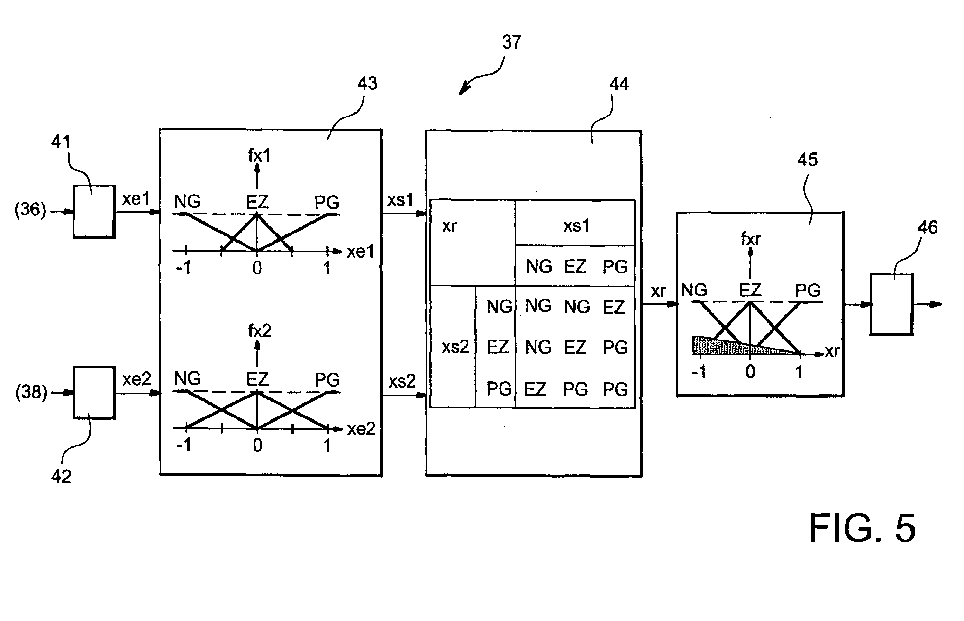

- la figure 5 représente complètement un élément de régulation à logique floue conforme à l'invention ;
- et la figure 6 illustre les résultats obtenus.

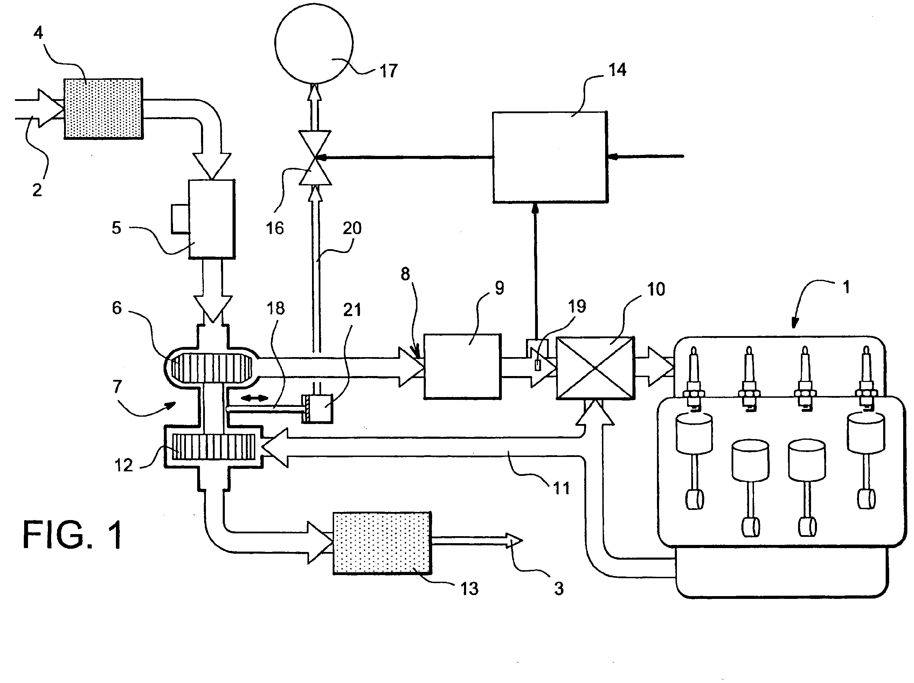

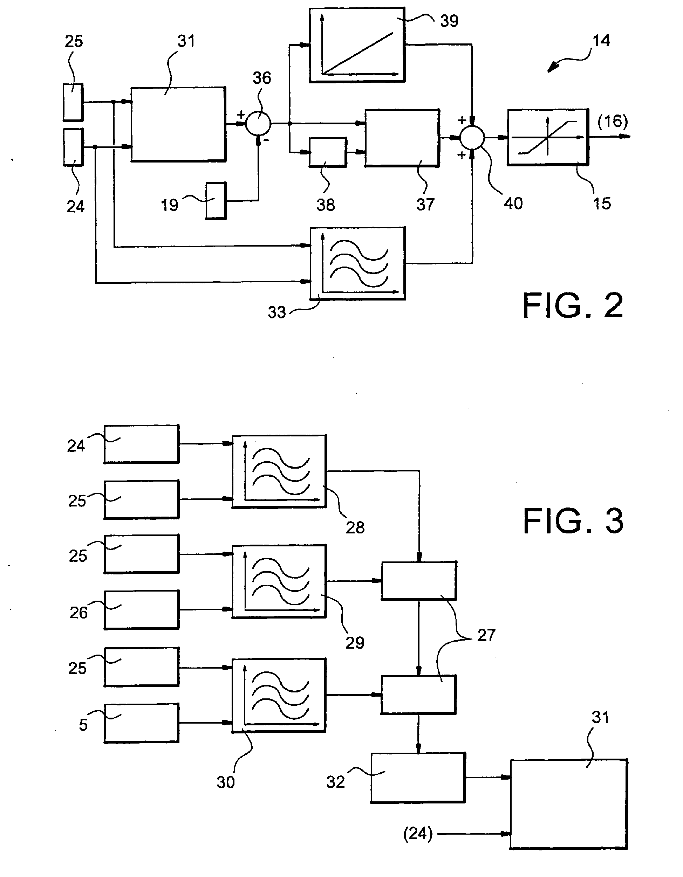

La figure 1 représente d'abord un moteur 1 à explosion alimenté en air frais par une entrée 2 et qui rejette les gaz brûlés par un échappement 3. L'air frais parcourt un collecteur d'admission 8 et passe successivement par un filtre 4 et un débitmètre 5 puis par un compresseur 6 d'un turbocompresseur 7 à régler. Après avoir été comprimé, il passe par un refroidisseur 9 et une vanne 10 de recirculation des gaz d'échappement. Les gaz d'échappement s'écoulent par un collecteur d'échappement 11 et traversent une turbine 12 du turbocompresseur 7 et un filtre à particules 13 avant de parvenir à l'échappement 3. Une unité de calcul électronique (UCE) est désignée par 14, une électrovanne par 16, une pompe à vide par 17, et une tige de régulation du turbocompresseur 7 par 18. Un régulateur 1 fait partie de l'UCE 14 et fournit un signal de commande à l'électrovanne 16 qui ouvre ou ferme une conduite 20 d'aspiration entre une chambre 21 située derrière la tige 18 et la pompe à vide 17 ; l'électrovanne est à ouverture progressive et peut donc faire varier à volonté la pression dans la chambre 21 d'après l'enfoncement de la tige 18. L'UCE 14 exploite une pression du collecteur d'admission 8 que lui fournit un capteur 19 et une consigne de pression qu'elle calcule. On passe maintenant au commentaire de la figure 2, qui illustre plus en détail la constitution de l'UCE 14.

Des valeurs de débit de carburant injecté et de régime du moteur 1 sont fournies à une carte logique 31 qui fournit une consigne de pression de suralimentation à une borne positive d'un soustracteur 36. Le régime du moteur est fourni par un tachymètre 25 ou un autre capteur mesurant la vitesse de rotation de l'arbre du moteur. La consigne de débit de carburant est déduite de la sortie d'un capteur 24 mesurant l'enfoncement de la pédale d'accélération. Il est connu qu'en réalité une consigne de débit de carburant est calculée au moyen d'une carte logique 28 (à la figure 3), renseignée par les capteurs 24 et 25, et que cette consigne peut être limitée, normalement pendant les régimes de forte accélération, par les sorties de deux autres cartes logiques 29 et 30 renseignées chacune par le capteur 25, et, respectivement, par des capteurs 26 et 27 indiquant le rapport de boîte de vitesse qui est engagé et le débit d'air frais. Les cartes 29 et 30 donnent des limites de débit de carburant acceptables en fonction du couple du moteur admissible et de la nécessité de ne pas produire de fumées noires. Le signal issu de la carte 28 est donc comparé successivement aux signaux issus des cartes 29 et 30 dans des portes 27 qui choisissent à chaque fois le signal minimum qui leur est appliqué ; et le débit de carburant peut encore être modifié en agissant sur le signal par une carte 32 supplémentaire qui définit une stratégie d'agrément de conduite.

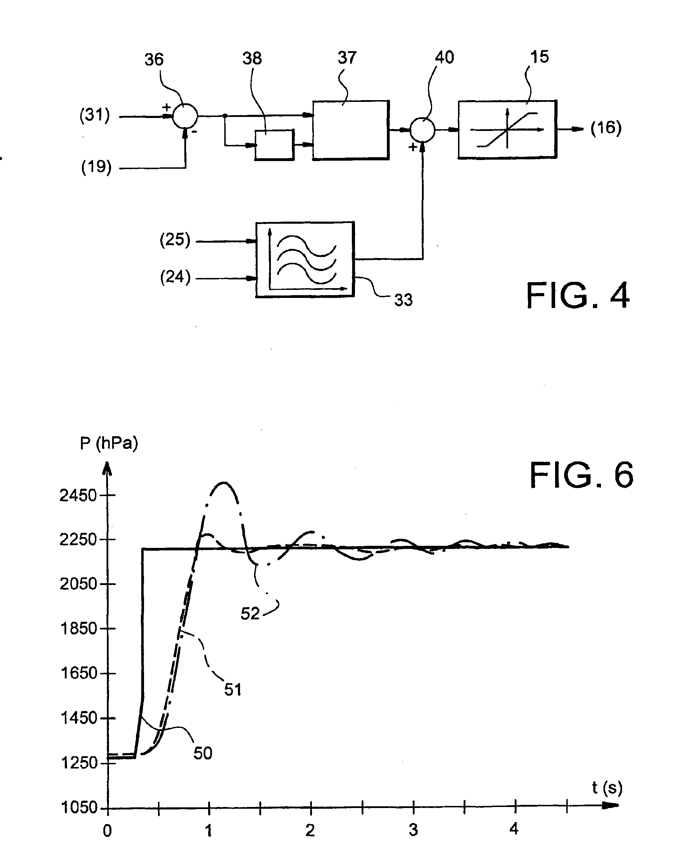

Revenant à la figure 2, le capteur de pression 19 fournit son signal à la borne négative du soustracteur 36, dont le signal de sortie est donc une différence entre la consigne de pression de suralimentation et la pression de suralimentation effectivement mesurée dans le collecteur d'admission 8. Cette différence est fournie habituellement à des régulateurs de calcul de termes proportionnel, dérivé et intégral ; dans l'invention, on utilise avant tout un régulateur à logique floue 37 renseigné par la différence de pression et sa dérivée temporelle calculée par un différentiateur 38. Si la fonction d'asservissement recherchée a un terme proportionnel dominant, on ajoute un régulateur 39 de calcul de terme intégral pour compléter l'asservissement ; si la fonction a un terme intégral dominant, il sera calculé directement par le régulateur à logique floue 37 et le régulateur 39 pourra être omis, comme le schématise la figure 4. On s'aperçoit qu'outre une bonne commande du moteur, l'invention autorise une simplification du régulateur de l'UCE 14. Dans tous les cas, il est avantageux d'utiliser une carte logique de pré-positionnement 33, elle aussi renseignée par les capteurs 24 et 25, qui donne une valeur initiale de réglage du turbocompresseur 7 valable pendant de régimes stables et qui permet donc d'aborder les régimes transitoires avec un bon réglage de départ. Les signaux de sortie de la carte 33, du régulateur à logique floue 37 et éventuellement du régulateur 39 sont fournis à un additionneur 40, et leur somme est fournie à un régulateur de sortie 15 qui commande directement la vanne 16.

Voici la constitution du régulateur 37 à logique floue. Les signaux provenant du soustracteur 36 et du différentiateur 38 arrivent, après avoir passé par des diviseurs 41 et 42 qui les mettent à la bonne échelle, à un élément 43 de partage des tâches (fuzzification) qui les transforme en variables xs1 et xs2. Alors que les variables xe1 et xe2 d'entrée dans l'élément 43 sont simples, les variables xs1 et xs2 sont multiples et résultent de l'application des variables d'entrée xe1 et xe2 à une pluralité de fonctions d'appartenance contenues dans l'élément 43. Dans l'exemple proposé, ces fonctions sont au nombre de trois et notées NG (Négatif Grand), EZ (Environ Zéro) et PG (Positif Grand). La première fonction NG a une valeur maximale pour xe inférieur ou égal à -1, nulle pour xe supérieur ou égal à 0 et linéaire entre ces deux valeurs. La fonction EZ est nulle pour xe1 inférieur ou égal à -0,5 ou xe2 inférieur ou égal à -1, maximale pour xe1 ou xe2 égal à 0 et de nouveau nulle pour xe1 supérieur ou égal +0,5 et xe2 supérieur ou égal à +1 ; elle est linéaire entre -0,5 et 0, puis 0 et +0,5, ou selon le cas entre -1 et 0 puis 0 et +1. Enfin, la fonction PG est symétrique de NG, c'est-à-dire nulle pour xe inférieur ou égal à 0, maximale pour xe supérieur ou égal à +1 et linéaire entre 0 et +1. Pour résumer, chaque variable x1 a trois composantes NG (xe), FZ (xe) et PG (xe).

L'élément suivant du régulateur 37 est un élément d'inférence 44 qui combine les variables xs1 et xs2 entre elles d'après un tableau. Il en sort un signal xr qui est lui aussi multiple et s'exprime par des valeurs prises dans trois nouvelles fonctions d'appartenance, ici aussi notées NG, EZ et PG. Le tableau illustré dans l'élément d'inférence 44 illustre que la combinaison de deux composantes NG de xe1 et xe2 est une composante NG, de même que la combinaison de composantes NG et EZ ; la combinaison de composantes PG et EZ est une composante PG, de même que la combinaison de deux composantes PG ; enfin la combinaison de composantes PG et NG est une composante EZ, de même que la combinaison de deux composantes EZ.

Cette section logique du régulateur 37 a donc pour effet de renforcer, pour la variable de sortie xr, les composantes qui représenteront le mieux la différence entre la consigne de pression et la pression réelle dans l'avenir proche, d'après la dérivée de cette différence : les composantes NG et PG de xs1 l'emportent, dans les combinaisons avec les composantes EZ et xs2, sur celles-ci ; mais les composantes extrêmes NG et PG de xs2 affectent toujours les composantes différentes de xs1 quand elles sont combinées à elles. Un effet d'anticipation de l'évaluation de la différence entre la consigne de pression et la pression réelle et donc obtenu.

La variable xr floue à trois composantes est fournie à un élément de départage des tâches (défuzzification) 45 qui la transforme en une variable simple u au moyen des nouvelles fonctions NG, EZ et PG. Ici, NG est maximale pour xr inférieur ou égal à -1, nulle pour xr supérieur ou égal à 0 et linéaire entre -1 et 0 ; EZ est égale à 0 pour xr égal à -1, maximale pour Xr = 0, nulle pour xr supérieur ou égal à +1, et linéaire entre -1 et 0, et 0 et +1. Enfin, la fonction PG est nulle pour xr inférieur ou égal à 0, maximale pour xr supérieur ou égal à +1 et linéaire entre 0 et +1. La valeur u est égale à

$$\frac{\int_{-1}^{+1} xr \cdot fxr \cdot dxr}{\int_{-1}^{+1} fxr \cdot dxr}, \text{ où fxr est la valeur prise par la fonc-}$$

tion d'appartenance résultante composée de NG, EZ et PG ; elle est aussi égale à l'abscisse du barycentre de la fonction d'appartenance résultante fxr pondérée par xr entre -1 et +1. Elle passe par un multiplicateur 46 qui corrige le changement d'échelle apporté par les diviseurs 41 et 42 et fournit le signal issu du régulateur 37 à l'électrovanne de commande 16.

La figure 6 permet de comparer la réponse que l'invention apporte à une commande d'accélération par comparaison à un dispositif antérieur. Il s'agit d'un diagramme gradué en temps et en pression, et la courbe 50 est la consigne de pression, qui a une forme en échelon suivi d'un palier. La courbe de réponse conforme à l'invention a la référence 51 et se caractérise par une montée assez rapide jusqu'à la valeur du palier puis une stabilité assez grande autour d'elle. Avec un régulateur ordinaire comprenant des termes proportionnel et intégral, on pourrait obtenir la courbe 52 après un réglage de l'UCE donnant une montée en pression aussi rapide qu'avec l'invention : les dépassements de consigne (overshoot) sont importants, d'environ 20% de la hauteur du palier, et les oscillations de pression restent ensuite beaucoup plus fortes et sont sensibles pendant plus d'une seconde.

Le mode d'asservissement de l'invention est donc caractérisé à la fois par une faible inertie à la montée et une forte inertie au palier.

On doit encore ajouter que l'invention permet de saturer facilement le signal du commande, c'est-à-dire de commander facilement un état extrême de l'électrovanne 16 et du turbocompresseur 7, ce qui est évidemment bénéfique pour la rapidité du régime transitoire, mais était difficile à obtenir avec les asservissements antérieurs, au point que la déposante avait proposé de supprimer complètement l'asservissement pendant les régimes transitoires et de le remplacer par un état extrême de commande du turbocompresseur dans une demande de brevet français récente. Cette solution devient inutile ici.

## Revendications

**1.** Dispositif de commande d'un moteur suralimenté d'automobile, comprenant : un collecteur d'admission d'air (8) menant au moteur (1) ; un collecteur d'échappement de gaz (11) quittant le moteur ; un turbocompresseur (7) composé d'un compresseur (6) sur le colleteur d'admission d'air et d'une turbine (12) sur le collecteur d'échappement de gaz, le turbocompresseur étant à réglage variable ; une unité de commande électronique (14) pour agir sur une pression de suralimentation obtenue dans le collecteur d'admission entre le compresseur et le moteur en réglant le turbocompresseur ; l'unité de commande électronique comprenant un module de calcul d'une consigne de pression de suralimentation (31), un module de calcul d'une différence de pression (36) entre ladite consigne de pression de suralimentation et la pression de suralimentation effectivement obtenue, un module de régulation (37, 15) agissant sur le turbocompresseur en calculant un état de réglage de celui-ci, qui comprend un élément renseigné par la différence de pression et fournissant une sortie exploitée pour agir sur le turbocompresseur ; **caractérisé en ce que** l'élément du module de régulation est un élément à logique floue (37) renseigné aussi par une dérivée de la différence de pression d'après le temps, et **en ce que** le dispositif comprend un différentiateur (38) calculant la dérivée de la différence de pression.

**2.** Dispositif selon le revendication 1, **caractérisé en ce que** le module de régulation comprend aussi un élément intégrateur (39) de la différence de la pression d'après de temps, qui fournit une sortie s'ajoutant à la sortie de l'élément à logique floue pour agir sur le turbocompresseur.

**3.** Dispositif selon l'une quelconque des revendications 1 ou 2, **caractérisé en ce que** le module de régulation comprend aussi une carte de pré-positionnement (33) qui fournit une partie s'ajoutant à la sortie de l'élément à logique floue pour agir sur le turbocompresseur, et qui est renseigné par des indicateurs de régime du moteur et de débit de carburant injecté.

4. Dispositif selon l'une quelconque des revendications 1 à 3, **caractérisé en ce que** l'élément à logique floue comprend une section logique d'inférence (44) qui a pour effet d'anticiper des états futurs de la différence de pression d'après des états présents de la dérivée.

## Claims

1. Device for controlling a supercharged engine of a motor car, comprising: an air inlet manifold (8) leading to the engine (1); an exhaust manifold (11) for gas leaving the engine; a turbocharger (7) consisting of a compressor (6) on the air inlet manifold and a turbine (12) on the gas exhaust manifold, the turbocharger having variable adjustment; an electronic control unit (14) for acting on a supercharging pressure obtained in the inlet manifold between the compressor and the engine by adjusting the turbocharger; the electronic control unit comprising a module for calculating a supercharging pressure set point (31), a module for calculating a pressure difference (36) between the said supercharging pressure set point and the supercharging pressure actually obtained, a regulation module (37, 15) acting on the turbocharger by calculating an adjustment state of the latter, which comprises an element receiving pressure difference information and supplying an output used to act upon the turbocharger; **characterized in that** the regulation module element is a fuzzy logic element (37) also receiving information on a drift in the pressure difference based on time, and **in that** the device comprises a differentiator (38) calculating the drift in the pressure difference.

2. Device according to Claim 1, **characterized in that** the regulation module also comprises an integrator element (39) for the pressure difference based on time, which supplies an output which is added to the output of the fuzzy logic element to act on the turbocharger.

3. Device according to any one of Claims 1 or 2, **characterized in that** the regulation module also comprises a pre-positioning card (33) which supplies a part which is added to the output of the fuzzy logic element to act on the turbocharger, and which receives engine speed and injected fuel rate indicator information.

4. Device according to any one of Claims 1 to 3, **characterized in that** the fuzzy logic element comprises an inference logic section (44) which has the effect of anticipating future states of the pressure difference based on present drift states.

## Patentansprüche

1. Steuervorrichtung für einen Auflademotor eines Kraftfahrzeugs, umfassend: einen Lufteinlasskollektor (8), der zum Motor (1) führt; einen Gasablasskollektor (11), der vom Motor weggeht; einen Turbokompressor (7), der aus einem Kompressor (6) auf dem Lufteinlasskollektor und einer Turbine (12) auf dem Gasablasskollektor besteht, wobei der Turbokompressor variabel einstellbar ist; eine elektronische Steuereinheit (14), um auf einen Aufladedruck einzuwirken, der im Einlasskollektor zwischen dem Kompressor und dem Motor durch Einstellung des Turbokompressors hergestellt wird; wobei die elektronische Steuereinheit ein Modul zur Berechnung eines Aufladedrucksollwerts (31), ein Modul zur Berechnung eines Druckunterschieds (36) zwischen dem Aufladedrucksollwert und dem tatsächlich erhaltenen Aufladedruck, ein Regelmodul (37, 15), das auf den Turbokompressor einwirkt, wobei ein Regelzustand desselben berechnet wird, umfassend ein Element, das über den Druckunterschied informiert ist und eine ausgewertete Ausgabe liefert, um auf den Turbokompressor einzuwirken, umfasst; **dadurch gekennzeichnet, dass** das Element des Regelmoduls ein Element mit Fuzzy-Logik (37) ist, das auch über eine Ableitung des Druckunterschiedes nach der Zeit informiert ist, und dass die Vorrichtung eine Differenziereinheit (38) umfasst, die die Ableitung des Druckunterschieds berechnet.

2. Vorrichtung nach Anspruch 1, **dadurch gekennzeichnet, dass** das Regelmodul auch ein Integrierelement (39) für den Druckunterschied nach der Zeit umfasst, das eine Ausgabe liefert, die sich zur Ausgabe des Elements mit Fuzzy-Logik hinzufügt, um auf den Turbokompressor einzuwirken.

3. Vorrichtung nach einem der Ansprüche 1 oder 2, **dadurch gekennzeichnet, dass** das Regelmodul auch eine Vorpositionierkarte (33) umfasst, die einen Teil liefert, der sich zur Ausgabe des Elements mit Fuzzy-Logik hinzufügt, um auf den Turbokompressor einzuwirken, und die von Indikatoren des Motorbetriebs und der eingespritzten Treibstoffmenge informiert wird.

4. Vorrichtung nach einem der Ansprüche 1 bis 3, **dadurch gekennzeichnet, dass** das Element mit Fuzzy-Logik einen logischen Inferenzabschnitt (44) umfasst, der bewirkt, dass zukünftige Zustände des Druckunterschieds nach vorhandenen Zuständen der Ableitung antizipiert werden.

FIG. 1

EP 1 365 132 B1

FIG. 2

FIG. 3

36      38      37      40      15

(31)

(19)

(16)

(25)

(24)

33

# FIG. 4

P (hPa)

# FIG. 6

2450

2250

2050

1850

1650

1450

1250

1050

52

51

50

0     1     2     3     4

t (s)

FIG. 5